# EUROPEAN PATENT SPECIFICATION

(11) **EP 2 498 939 B1**
(45) Date of publication and mention of the grant of the patent: **02.03.2016**
(21) Application number: 10829345.7
(22) Date of filing: 10.11.2010
(51) Int. Cl.: B23B 51/00, B23G 5/06, B23C 5/10, B27G 15/00, B25D 17/08, B23B 51/10, B23B 51/02, B25D 17/02

(54) **MACHINE TOOL BIT**
MASCHINENWERKZEUG
OUTIL DE MACHINE-OUTIL

(30) Priority: 13.11.2009 AU 2009238245; 06.07.2010 AU 2010202839
(43) Date of publication of application: 19.09.2012
(73) Proprietor: Gischus, Simon Dean, Mt Evelyn, Victoria 3796 (AU); Kilpatrick, Ian Lachlan, Dundowran Beach, Queensland 4655 (AU)
(72) Inventor: Gischus, Simon Dean, Mt Evelyn, Victoria 3796 (AU); Kilpatrick, Ian Lachlan, Dundowran Beach, Queensland 4655 (AU)
(74) Representative: Dowling, Andrew
(86) International application number: PCT/AU2010/001498
(87) International publication number: WO 2011/057328

(56) References cited:
- CN-Y- 2 741 706
- DE-A1- 19 604 283
- DE-U1- 20 001 825
- GB-A- 1 209 196
- GB-A- 2 453 250
- JP-A- 2002 172 514
- JP-U- H0 663 230
- JP-U- S60 153 711
- US-A- 5 152 642
- US-A- 5 529 444
- 'SDS Shanks with grooves.' DRILL BITS & SHANKS., [Online] XP008158011 Retrieved from the Internet: <URL:http://web.archive.org/_web/2007110520 5451 /http://www.ostartools.com/products/fo rmasonry/sdsdrills/sdsplusdrills.htm>

## Description

### Field of the Invention.

The present invention relates to a machine tool bit as per the preamble of claim 1. In particular, the present invention relates to a machine tool bit having a failure control mechanism. More specifically, the present invention relates to a machine tool bit having a predictable point at which the bit will fail upon sufficient accumulation of overstress conditions. Further, the present invention relates to a machine tool bit that reduces the risk of injury to workers in the event of the failure of the machine tool bit. Such a machine tool bit is known from US 51526642.

### Background Art.

Machine tools are commonly used for the fabrication of a wide variety of components, and in particular metal components, by machining. Machine tools can perform a number of functions, including drilling, tapping, reaming and milling, and the function performed by the machine tool is determined in part by the machine tool itself and in part by the choice of machine tool bit used in the machine tool.

In conventional machine tools, such as hand operated tools, electric hand tools, numerical control (NC) machines and computerized numerical control (CNC) machines, the bit comprises a drive section and a work section, wherein the drive section is held by the machine tool, and the work section is brought into contact with the component to be machined. It will be understood, however, that the term "machine tool" may be used to refer to any machine that provides a driving force for transmission to a machine tool bit. Thus, the term "machine tool" could also refer to devices driven by diesel, steam, hydraulics, pneumatics, water, gas, electricity, solar power, geothermal power or human power, or combinations thereof.

Due to the high mechanical stresses placed on machine tool bits, the bits may fail, particularly after extensive use, or if the material being machined is of high mechanical strength. While the failure of machine tool bits is inevitable, broken parts are often difficult to remove, and their removal not only reduces the operational time of the machine tool, but may also cause damage to the component being machined. In addition, the failure of machine tool bits may result in the ejection of metal fragments from the machine tool. These metal fragments may be hot, sharp and/or ejected at high velocity, making them hazardous to workers in the vicinity of the machine tool.

Thus, there would be an advantage if it were possible to provide a machine tool bit that, in the event of failure, could be quickly and easily removed from the component. In addition, there would be an advantage if, once failure had occurred, the machine tool bit could be reused, thereby extending its operational life.

Further, there would be an advantage if it were possible to provide a machine tool bit that reduced the risk of injury to workers in the vicinity of the machine tool upon failure of the machine tool bit.

It will be clearly understood that, if a prior art publication is referred to herein, this reference does not constitute an admission that the publication forms part of the common general knowledge in the art in Australia or in any other country.

Throughout this specification, the term "comprising" and its grammatical equivalents shall be taken to have an inclusive meaning unless the context of use indicates otherwise.

### Summary of the Invention.

It is an object of the present invention to provide a machine tool bit which may overcome at least some of the abovementioned disadvantages, or provide a useful or commercial choice.

In one aspect, the invention provides a machine tool bit according to claim 1 comprising a work portion and a shank extending from the work portion, the shank being provided with one or more regions of reduced mechanical torque strength, wherein the one or more regions of reduced mechanical torque strength comprise one or more notches, slots, recesses, channels, and/or at least two bores, and wherein the one or more notches, slots, recesses, channels and/or at least two bores are filled with a material to provide additional transverse stability to the one or more regions of reduced mechanical torque strength.

A skilled addressee will understand that the term "work portion" refers to the function and location of the portion of the machine tool bit. In particular, the term "work portion" refers to the portion of the machine tool bit adapted to be brought into contact with the component to be machined.

The work portion may be provided with means for carrying out any suitable kind of work. For instance, the work portion may be provided with means for drilling, tapping, milling, reaming or the like.

The shank may be of any suitable configuration. However, in a preferred embodiment of the invention, the shank comprises a drive shaft. A skilled addressee will understand that the length of the drive shaft is not critical and, while the shape is also not critical, it is preferred that the drive shaft is substantially cylindrical.

The shank may further be provided with connection means adapted to enable to the machine tool bit to be connected to a machine tool. The connection means may be of any suitable form, although in some embodiments the connection means comprises a section having a particular configuration and adapted to engage with a correspondingly shaped receiving portion in the machine tool. For instance, the connection means may comprise a portion of the shank having a square or hexagonal cross-section, although a skilled addressee will understand that any suitable cross-sectional shape could be used. Alternatively, the connection means may comprise a slot, projection, recess, keyway or the like (or a combination thereof) adapted to engage with corresponding receiving portion in the machine tool. Preferably the connection means are located at or adjacent an end of the machine tool bit furthest from the work portion, although a skilled addressee will understand that the connection means may be located at any suitable point in the shank.

Preferably, the driving force of the machine tool bit is provided by the machine tool. While any suitable force may be imparted to the machine tool bit by the machine tool, it is envisaged that, in preferred embodiments of the invention, the machine tool will provide a rotational force to the machine tool bit.

The one or more regions of reduced mechanical strength are, as previously stated, located in the shank of the machine tool bit. The one or more regions of reduced mechanical strength may be of any suitable configuration, and any suitable method of introducing reduced mechanical strength into the machine tool bit may be used.

The purpose of the one or more regions of reduced mechanical strength is to provide the machine tool bit with a designated point or region at which failure of the machine tool bit is likely to occur in the event that the mechanical stresses and strains within the machine tool bit reach or exceed a critical level. For instance, should the work portion of a conventional machine tool bit become caught or trapped in the component to be machined, failure of the machine tool bit will often occur in the work portion. The broken work portion must then be removed from the component which may be both difficult and time-consuming.

By contrast, providing the machine tool bit with one or more regions of reduced mechanical strength ensures that, in the event of failure, the machine tool bit will break at one of the regions of reduced mechanical strength. Thus, the broken machine tool bit will be able to be removed from the component quickly and easily, and the machine tool will only be out of service for a relatively short period of time.

In some embodiments of the invention, the one or more regions of reduced mechanical strength may be fabricated from a material having reduced mechanical strength to the remainder of the machine tool bit (for instance the one or more regions of reduced mechanical strength may be fabricated from a more brittle or ductile material to the remainder of the machine tool bit). Alternatively, the one or more regions of reduced mechanical strength may have a different cross-sectional shape to the rest of the shank (for instance, the one or more regions of reduced mechanical strength may have a square cross-section compared to a circular cross-section of the rest of the shank). Preferably the one or more regions of reduced mechanical torque strength will allow for the maximum retention of lateral and/or transverse mechanical strength so that maximum tool service life may be possible. It is envisaged that, although the retention of lateral and/or transverse strength is maximised, the fracture or breakage of the machine tool bit will still occur in the one or more regions of reduced mechanical strength in over-torque conditions. However, it is envisaged that the retention of lateral and/or transverse strength will prevent accidental damage or breakage of the machine tool bit caused by lateral movement or bending of the machine tool bit, either manually or machine-created.

In another aspect, there is provided a machine tool bit comprising a work portion and a shank extending from the work portion, wherein the shank is provided with one or more regions of reduced mechanical torque strength in the form of one or more notches, slots, recesses, channels, and/or at least two bores and wherein the shank is constructed such that the transverse stability of the machine tool bit is greater than a machine tool bit in which an equivalent reduction in mechanical torque strength is achieved by a reduction in diameter of the shank, and wherein the one or more regions of reduced mechanical torque strength are filled with a material to provide additional transverse stability to the one or more regions of reduced mechanical torque strength.

In other embodiments of the invention, the one or more regions of reduced mechanical strength may have a reduced cross-sectional area compared to the remainder of the shank. In these embodiments of the invention, the one or more regions of reduced mechanical strength may be created by forming one or more recesses, notches, slots, bores, holes, regions of reduced diameter, channels and/or the like in the shank to create the one or more region of reduced mechanical strength. The recess, notch, channel and/or the like may be continuous, extending around the entire circumference of the shank, or may comprise one or more noncontinuous channels, notches and/or the like extending around at least a portion of the circumference of the shank.

In order to arrange the machine tool bit such that the effect on transverse stability of the machine tool bit is minimised, a number of techniques could be employed.

For instance, in embodiments of the invention in which the region of reduced mechanical strength comprises a region of the shank having a reduced diameter, the difference cross-sectional area of the region of reduced mechanical strength and the cross sectional area of the shank may be filled with a material such that the relative lateral and/or transverse mechanical strength is increased relative to the mechanical torque strength when the one or more regions of reduced mechanical strength are compared to the other regions of the shank. The material that fills the space (i.e. the difference in cross-sectional area of the region of reduced mechanical strength compared to the cross sectional area of the shank) is normally a suitable metallic material. Alternatively the material that fills the space may be made from an alloy, polymer, ceramic, composite and/or any material according to a suitable materials selection chart. This material may be backfilled into the space, such as by moulding, extrusion or similar process or processes. The material may also be cast or formed in the space. Alternatively the material may be in the form of a collar and/or the like. If the material is in the form of a collar it may be expandable such that it may pass over the shank and fit into the space. Alternatively if the material is in the form of a collar it may be shrinkable. A shrinkable material may be shrinkable by application of heat, cold, hardener, other type of compound and/or the like.

In another embodiment of the invention, the shank may be provided with one or more slots, splines, recesses, channels and/or the like to create one or more regions of reduced mechanical strength (due to the reduced cross-sectional area). Preferably, the slots, splines, recesses, channels or the like extend in a direction substantially parallel to the longitudinal axis of the shank. In a preferred embodiment of the invention, the slots, splines, recesses, channels or the like are spaced apart from one another such that regions having a diameter equal to that of the remainder of the shank are interposed between the slots, splines, recesses, channels or the like. This configuration provides that the relative lateral and/or transverse mechanical strength of the machine tool bit is increased relative to the mechanical torque strength when the one or more regions of reduced mechanical strength are compared to the other regions of the shank, or to a machine tool bit having a region of reduced diameter only in the shank.

In one embodiment, one or more sections of the shank may be heat treated to reduce the mechanical strength. Alternatively, the one or more sections of the shank may be cold treated to reduce the mechanical strength. Preferably, such treatment will allow for the maximum retention of lateral and/or transverse mechanical strength compared to the mechanical torque strength.

In another embodiment, one or more sections of the shank may be soldered, welded, fuse welded and/or the like together to form a joint that provides the one or more regions of reduced mechanical strength.

In one embodiment, the shank may be provided with one or more holes, bores or the like, defining one or more regions of reduced mechanical strength. The one or more holes provide that the maximum external diameter of the reduced cross-sectional area may be the same as the diameter of the rest of the shank. This configuration provides that the relative lateral and/or transverse mechanical strength is increased relative to the mechanical torque strength when the one or more regions of reduced mechanical strength are compared to the other regions of the shank. Normally the holes are bored or drilled into the shank. Alternatively other appropriate methods can be used to provide the shank with holes. Preferably the holes are transverse to the shank to maximize the effectiveness. Alternatively the holes may be provided at a different angle to the shaft. In a preferred embodiment of the invention, the holes are bored across the maximum diameter of the shank. Preferably, the holes are bored entirely through the shank.

By introducing one or more regions of reduced mechanical strength into the shank in this manner, it may be ensured that any mechanical failure of the machine tool bit will occur at the one or more regions of reduced mechanical strength. However, by increasing the transverse stability of the machine tool bit in comparison to a machine tool bit having a region of reduced diameter only, the useful service life of the machine tool bit may be extended while still providing means for controlling the point at which the machine tool bit will fracture in over-torque conditions.

The one or more regions of reduced mechanical strength may be located at any suitable point on the shank. However, it is preferred that the one or more regions of reduced mechanical strength may be located a sufficient distance from the work portion so as to ensure that, in the event of failure, the broken machine tool bit may be retrieved easily from the component to be machined.

In embodiments in which the shank is provided with a plurality of regions of reduced mechanical strength, the regions may be of the same type, or may differ from another such that, in the event of a mechanical failure, a particular region fails first before the other regions. For instance, the plurality of regions may be provided with varying cross-sections such that a first failure will occur at the region having the smallest cross-section. In this way, the machine tool bit may be re-used until all of the regions of reduced mechanical strength have failed.

In some embodiments of the invention, the machine tool bit may be provided with a plurality of connection means. For instance, a first connection means may be provided at or adjacent the end of the shank furthest from the work portion of the machine tool bit, with a first region of reduced mechanical strength being located intermediate the first connection means and the work portion. A second connection means may be provided at a point intermediate the work portion and the first region of reduced mechanical strength, with a second region of reduced mechanical strength located intermediate the second connection means and the work portion. If desired, a third connection means may be provided still closer to the work portion at a point intermediate the work portion and the second region of reduced mechanical strength. Further connection means may be provided as desired in a similar manner. The advantage of this arrangement is that providing the regions of reduced mechanical strength above the work portion means that the broken machine tool bit may be grasped and removed from the component being machined due to the fact that the broken shank will always protrude above the component. In addition, providing multiple regions of reduced mechanical strength means that the machine tool bit may be re-used after a mechanical failure, thereby extending the life of the machine tool bit. This is simply not possible with conventional machine tool bits.

It will be understood that, in some embodiments of the invention, the entire shank may be of a lesser mechanical strength than the work portion. For instance, the entire shank may have a reduced diameter in comparison to that of the work portion. Alternatively, the entire shank may have a reduced mechanical torque strength compared to the work portion.

In another aspect, the invention resides broadly in a machine tool bit having one or more regions of reduced mechanical strength, such that, upon the accumulation of sufficient mechanical stresses, the machine tool bit is adapted to fail at, at least one of the one or more regions of reduced mechanical strength.

Although the present invention has been described largely in connection with a machine tool bit, a skilled addressee will understand that the present invention could also be used in connection with other items which require the use of bits. For instance, the present invention could be adapted for use in manual hand-held tools, hand-held power tools, small-scale industrial equipment, larger drilling equipment such as rock drills, drills for oil, gas and mining operations, marine drills or the like.

The present invention realises a number of significant advantages over existing machine tool bits. Firstly, the present invention provides a predictable failure point at which the machine tool bit will fail upon accumulation of sufficient overstress conditions. This makes the bit simple to remove from, for instance, the component being machined, as well as the machine tool. Further, the provision of the material located in the regions of reduced mechanical torque strength to minimise the effect on the transverse stability of the machine tool has the added benefit of reducing safety hazards to nearby personnel upon failure of the bit. By this it will be understood that, upon failure of conventional tool bits, fragments of metal may be ejected, thereby posing a serious threat to the safety of any persons in the vicinity.

### Brief Description of the Drawings.

An embodiment of the invention will be described with reference to the following drawings in which:
- Figure 1: illustrates a plan view of a machine tool bit;
- Figure 2: illustrates a plan view of a machine tool bit;
- Figure 3: illustrates a plan view of a machine tool bit;
- Figure 4: illustrates a plan view of a machine tool bit;
- Figure 5: illustrates a plan view of a machine tool bit; and
- Figure 6: illustrates a plan view of a machine tool bit.
- Figure 7: illustrates a plan view and a cross section view of a machine tool bit according to an embodiment of the present invention.
- Figure 8: illustrates a plan view and a cross section view of a machine tool bit.
- Figure 9: illustrates a plan view and a cross section view of a machine tool bit.
- Figure 10: illustrates a plan view and a cross section view of a machine tool bit according to an embodiment of the present invention.
- Figure 11: illustrates a plan view and a cross section view of a machine tool bit.
- Figure 12: illustrates a plan view and a cross section view of a machine tool bit.

### Detailed Description of the Drawings.

It will be appreciated that the drawings have been provided for the purposes of illustrating preferred embodiments of the present invention and that the invention should not be considered to be limited solely to the features as shown in the drawings.

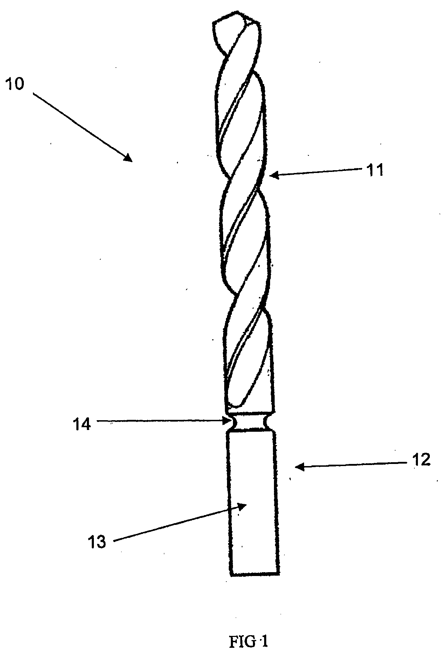

In Figure 1 there is shown a machine tool bit 10. The machine tool bit 10 is a drill bit.

The machine tool bit 10 comprises a work portion 11 to be brought into contact with a component (not shown) to be drilled and a shank 12 adapted for connection to a machine tool, hand-held drill or the like (not shown).

The shank 12 comprises a drive shaft 13 having an area of reduced mechanical strength therein, in the form of an annular notch 14 cut or formed in the drive shaft 13. The diameter of the annular notch 14 is less than that of the drive shaft 13 and the work portion 11 meaning that the annular notch is the mechanically weakest point of the entire machine tool bit 10.

Thus in the event of the mechanical stresses in the machine tool bit 10 exceeding a critical level, the machine tool bit 10 will fail (by breaking, fracturing and so on) at the annular notch 14, meaning that the work portion 11 of the machine tool bit 10 remains undamaged.

By ensuring that mechanical failure of the machine tool bit 10 occurs at the annular notch 14, it may be ensured that, when failure occurs, the failure does not occur in the work portion 11. This means that the broken piece of the machine tool bit 10 may be removed from the component (not shown) being drilled quickly, easily and with minimal risk of damage to the component.

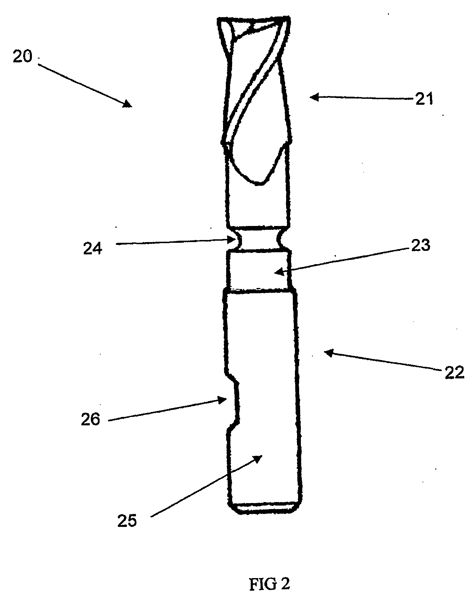

In Figure 2, there is shown a machine tool bit 20. The machine tool bit 20 is a mill bit.

The machine tool bit 20 comprises a work portion 21 to be brought into contact with a component (not shown) to be milled and a shank 22 adapted for connection to a machine tool, hand-held power tool or the like (not shown).

The shank 22 comprises a drive shaft 23 having an area of reduced mechanical strength therein, in the form of an annular notch 24 cut or formed in the drive shaft 23. The diameter of the annular notch 24 is less than that of the drive shaft 23 and the work portion 21 meaning that the annular notch 24 is the mechanically weakest point of the entire machine tool bit 20. Thus in the event of the mechanical stresses in the machine tool bit 20 exceeding a critical level, the machine tool bit 20 will fail (by breaking, fracturing and so on) at the annular notch 24, meaning that the work portion 21 of the machine tool bit 20 remains undamaged and may be removed quickly and easily from the component.

The shank 22 further comprises connection means 25 to be received in a corresponding receiving portion (not shown) of a machine tool (not shown). In the embodiment of the invention shown in Figure 2, the connection means 25 includes a slot 26 adapted for engagement with a corresponding part (such as a bar or the like) in the machine tool.

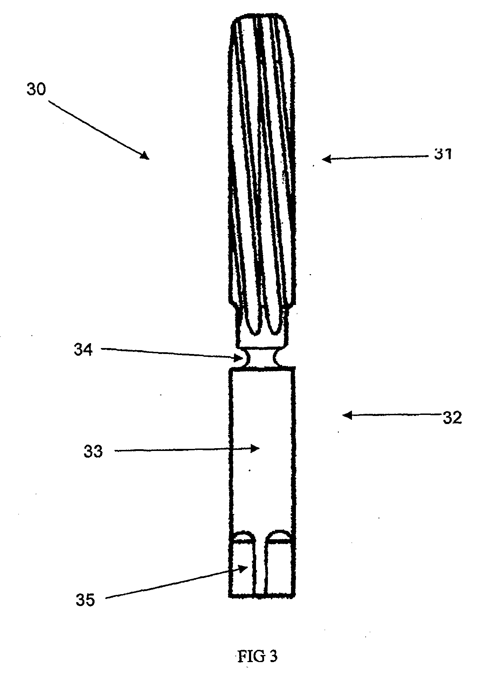

In Figure 3, there is shown a machine tool bit 30. The machine tool bit 30 is a bit for a reamer.

The machine tool bit 30 comprises a work portion 31 to be brought into contact with a component (not shown) to be reamed and a shank 32 adapted for connection to a machine tool, hand-held power tool or the like (not shown).

The shank 32 comprises a drive shaft 33 having an area of reduced mechanical strength therein, in the form of an annular notch 34 cut or formed in the drive shaft 33. The diameter of the annular notch 34 is less than that of the drive shaft 33 and the work portion 31 meaning that the annular notch 34 is the mechanically weakest point of the entire machine tool bit 30. Thus in the event of the mechanical stresses in the machine tool bit 30 exceeding a critical level, the machine tool bit 30 will fail (by breaking, fracturing and so on) at the annular notch 34, meaning that the work portion 31 of the machine tool bit 30 remains undamaged and may be removed quickly and easily from the component.

The machine tool bit 30 of Figure 3 further comprises connection means 35 located at the end of the shank 32 furthest from the work portion 31. The connection means 35 are adapted for connection to a receiving portion (not shown) in a machine tool (not shown) such that the machine tool bit 30 may be connected to and retained by the machine tool (not shown) during use. Further, the machine tool (not shown) is adapted to transfer the driving force to the machine tool bit 30 by imparting a rotational force to the machine tool bit 30.

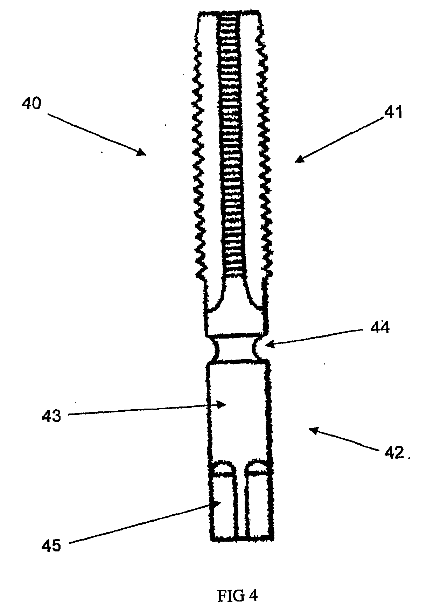

In Figure 4, there is shown a machine tool bit 40. The machine tool bit 40 is a bit for a tapping bit.

The machine tool bit 40 comprises a work portion 41 to be brought into contact with a component (not shown) to be tapped and a shank 42 adapted for connection to a machine tool, hand-held power tool or the like (not shown).

The shank 42 comprises a drive shaft 43 having an area of reduced mechanical strength therein, in the form of an annular notch 44 cut or formed in the drive shaft 43. The diameter of the annular notch 44 is less than that of the drive shaft 43 and the work portion 41 meaning that the annular notch 44 is the mechanically weakest point of the entire machine tool bit 40. Thus in the event of the mechanical stresses in the machine tool bit 40 exceeding a critical level, the machine tool bit 40 will fail (by breaking, fracturing and so on) at the annular notch 44, meaning that the work portion 41 of the machine tool bit 40 remains undamaged and may be removed quickly and easily from the component.

The machine tool bit 40 of Figure 4 further comprises connection means 45 located at the end of the shank 42 furthest from the work portion 41. The connection means 45 are adapted for connection to a receiving portion (not shown) in a machine tool (not shown) such that the machine tool bit 40 may be connected to and retained by the machine tool (not shown) during use. Further, the machine tool (not shown) is adapted to transfer the driving force to the machine tool bit 40 by imparting a rotational force to the machine tool bit 40

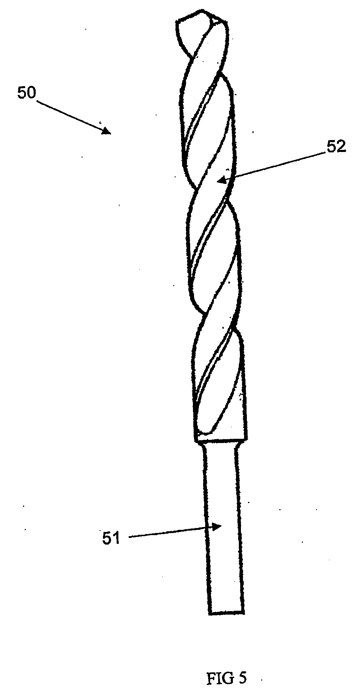

In Figure 5 there is shown a machine tool bit 50. The machine tool bit 50 is essentially the same as that illustrated in Figure 1, except that the shank 51 of the machine tool bit 50 is of a reduced diameter along its entire length in comparison to the work portion 52.

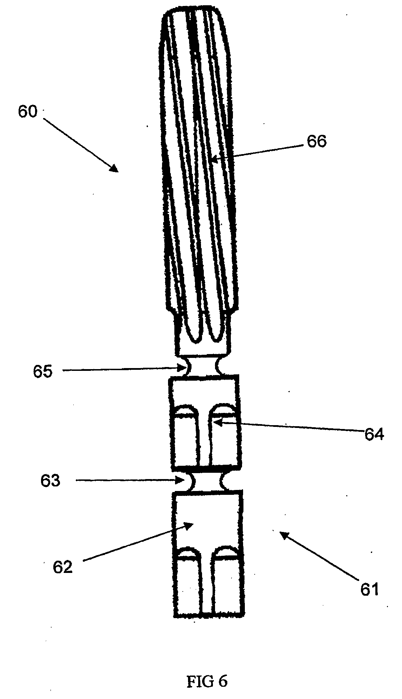

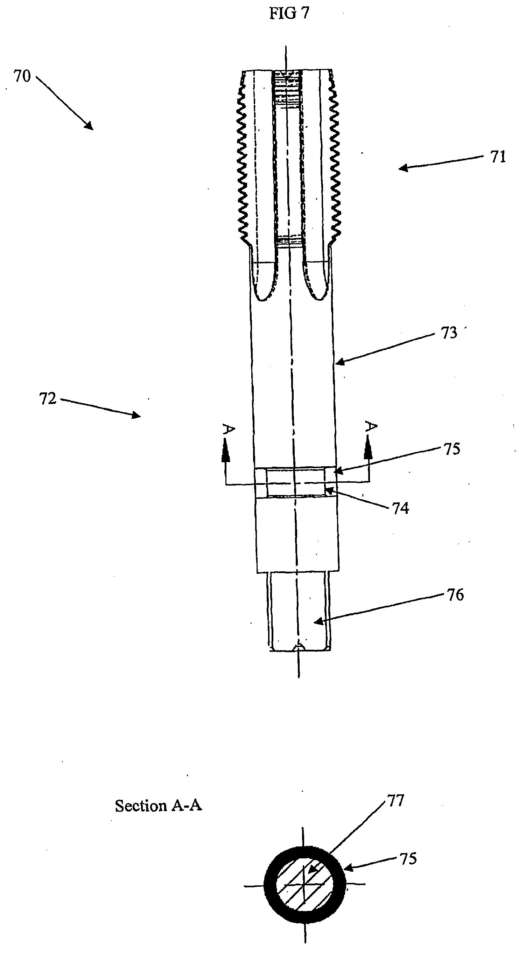

In Figure 6 there is shown a machine tool bit 60. The machine tool bit 60 is essentially the same as that illustrated in Figure 3, except that the shank 61 of the machine tool bit 60 is provided with a first connection means 62 and a first annular notch 63, as well as a second connection means 64 and a second annular notch 65. It is also envisaged that this type of arrangement may be incorporated into machine tools as depicted in figures 7-12 wherein the notches are replaced with areas of reduced mechanical torque strength.

The first annular notch 64 may be of reduced diameter to the second annular notch 65 such that failure of the machine tool bit 60 occurs first in the first annular notch 64. Once failure has occurred, the first connection means 62 may be released from the machine tool (not shown) and the second connection means 64 may then be connected to the machine tool (not shown), thereby extending the useful life of the machine tool bit 60.

In the event of a second mechanical failure, the failure will occur at the second annular notch 65, meaning that the work portion 66 may still be easily and quickly retrieved from the component (not shown) being machined.

In Figure 7 there is shown a machine tool bit 70 according to an alternative embodiment of the present invention. The machine tool bit 70 is essentially the same as that illustrated in Figure 4, except that the region of reduced diameter 74 (also the region of reduced mechanical torque strength) is filled over with a material 75 to increase the lateral and transverse mechanical strength of the region of reduced mechanical torque strength (i.e. minimally affecting transverse stability relative to the reduced mechanical torque strength). The cross section A-A shows the reduced diameter 77 and the material 75 which fills the difference between the diameter of the shaft 73 and the diameter of the region of reduced diameter 74. The connection means 75 is adapted for connection to a receiving portion (not shown) in a machine tool (not shown).

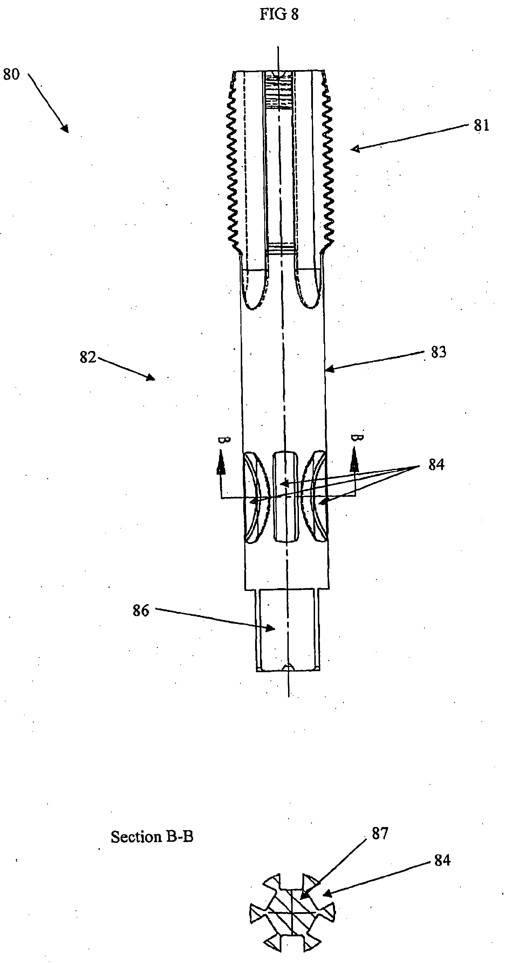

In Figure 8 there is shown a machine tool bit 80. The shaft 83 has axial slots 84 providing a region of reduced mechanical torque strength. The cross section B-B shows the reduced cross sectional area 87 as a result of the axial slots 84. The reduced cross sectional area 87 has a maximum diameter the same as the shaft 83, providing a relative increase in the lateral and transverse mechanical strength compared to the mechanical torque strength (i.e. minimally affecting transverse stability relative to the reduced mechanical torque strength).

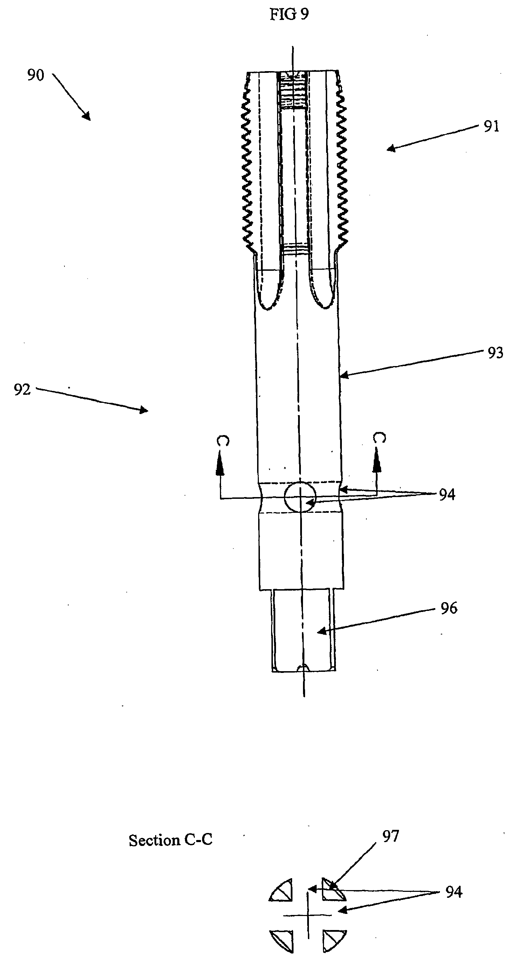

In Figure 9 there is shown a machine tool bit 90. The shaft 93 contains two bores 94 providing a region of reduced mechanical torque strength. The cross section C-C shows the reduced cross sectional area 97 as a result of the bores 94. The reduced cross sectional area 97 has a maximum diameter the same as the shaft 93, providing a relative increase in the lateral and transverse mechanical strength compared to the mechanical torque strength (i.e. minimally affecting transverse stability relative to the reduced mechanical torque strength).

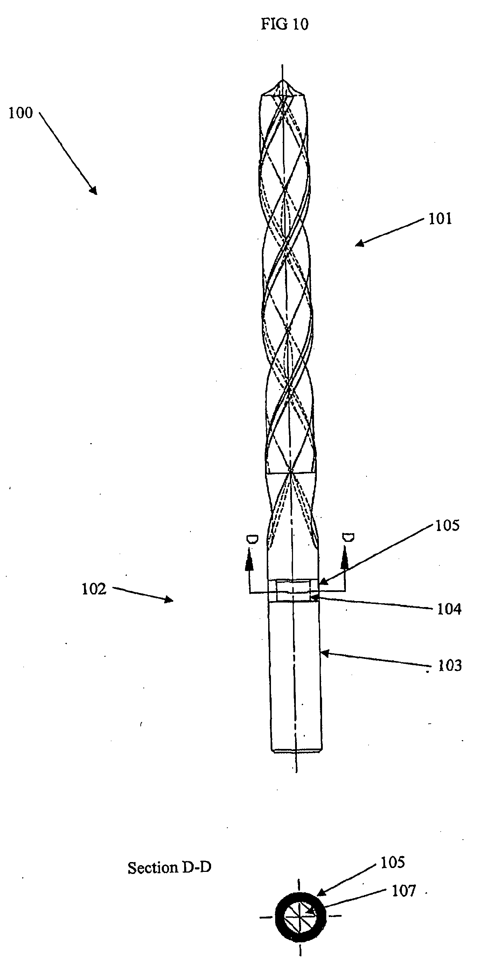

In figure 10 there is shown a machine tool bit 100 similar to the machine tool bit 70 as illustrated in Figure 7, the difference here is that the shaft 103 is the connection means and the work portion 101 is different, in this case, the machine tool bit 100 is a drill bit.

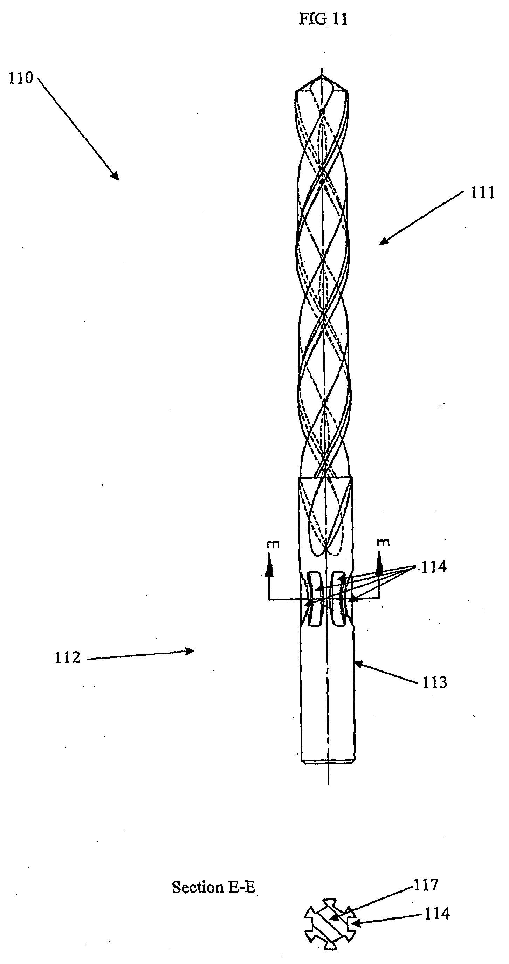

In figure 11 there is shown a machine tool bit 110 similar to the machine tool bit 80 as illustrated in Figure 8, the difference here is that the shaft 113 is the connection means and the work portion 111 is different, in this case, the machine tool bit 110 is a drill bit.

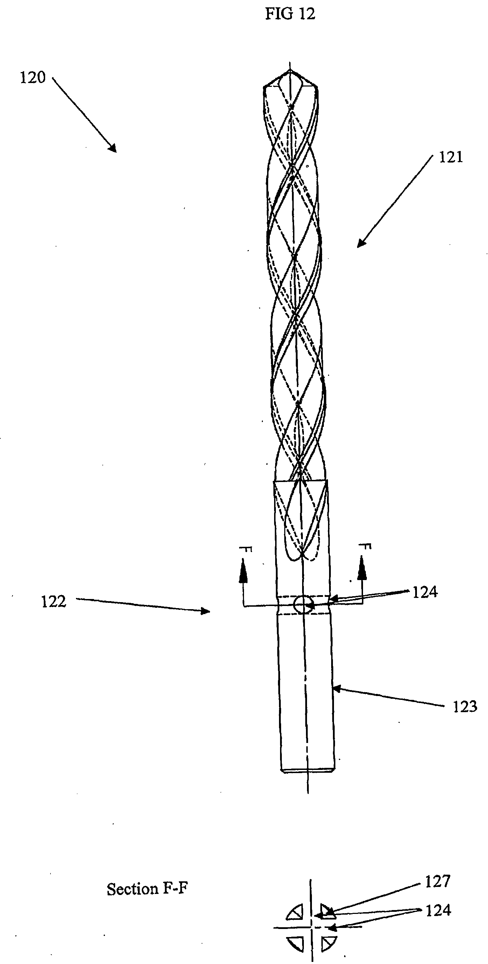

In figure 12 there is shown a machine tool bit 120 similar to the machine tool bit 90 as illustrated in Figure 9, the difference here is that the shaft 123 is the connection means and the work portion 121 is different, in this case, the machine tool bit 120 is a drill bit.

## Claims

1. A machine tool bit (10, 20, 30, 40, 50, 60, 70, 80, 90, 100, 110, 120) comprising a work portion (11, 21, 31, 41, 52, 66, 71, 81, 91, 101, 111, 121) and a shank (12, 22, 32, 42, 51, 61, 72, 82, 92, 102, 112, 122) extending from the work portion, the shank being provided with one or more regions of reduced mechanical torque strength, wherein the one or more regions of reduced mechanical torque strength comprise one or more notches (14, 24, 34, 44, 63, 65), slots, recesses, channels, and/or at least two bores (94), **characterised in that** the one or more notches, slots, recesses, channels and/or at least two bores are filled with a material (75) to provide additional transverse stability to the one or more regions of reduced mechanical torque strength.

2. A machine tool bit according to claim 1 wherein the shank comprises a drive shaft (13, 23, 33, 43, 73, 83, 93, 103, 113, 123).

3. A machine tool bit according to claim 1 or claim 2 wherein the shank is adapted for connection to a machine operated device, hand operated device or hand-held power tool.

4. A machine tool bit according to any one of the preceding claims wherein the one or more notches, slots, recesses, channels, and/or at least two bores are provided longitudinally to the axis of the shank.

5. A machine tool bit according to claim 1, wherein the one or more regions of reduced mechanical torque strength comprise a single annular notch extending about the circumference of the shank.

6. A machine tool bit according to any one of the preceding claims, wherein the machine tool bit comprises one or more connection means (25, 35, 45, 62, 64, 76, 86, 96) adapted to connect the machine tool bit to a machine tool.

7. A machine tool bit according to claim 6 wherein a first connection means (62) is located at or adjacent an end of the machine tool bit furthest from the work portion (66), and a first region of reduced mechanical torque strength is located intermediate the first connection means and the work portion.

8. A machine tool bit according to claim 7 wherein a second connection means (64) is located intermediate the first region of reduced mechanical torque strength and the work portion.

9. A machine tool bit according to any one of the preceding claims wherein the work portion is adapted to be brought into contact with a component to be machined.

10. A machine tool bit according to any one of the preceding claims wherein the machine tool bit is adapted for drilling, milling, reaming or tapping a component to be machined.

11. A machine tool bit according to claim 9 or claim 10 wherein the component to be machined includes metal, plastic, wood, stone or ceramic components, rock, earth, the sea floor and/or the like.

12. A machine tool bit according to any one of the preceding claims, wherein upon the accumulation of sufficient mechanical torque stresses, the machine tool bit is adapted to fail at, at least one of the one or more regions of reduced mechanical torque strength.

13. A machine tool bit according to any of the preceding claims, wherein the shank is constructed such that the transverse stability of the machine tool bit is greater than a machine tool bit in which an equivalent reduction in mechanical torque strength is achieved by a reduction in diameter of the shank.

14. A machine tool bit according to claim 13 wherein the one or more regions of reduced mechanical torque strength comprises a single annular notch extending about the circumference of the shank.

## Patentansprüche

1. Werkzeugmaschineneinsatz (10, 20, 30, 40, 50, 60, 70, 80, 90, 100, 110, 120), umfassend einen Arbeitsabschnitt (11, 21, 31, 41, 52, 66, 71, 81, 91, 101, 111, 121) und einen Schaft (12, 22, 32, 42, 51, 61, 72, 82, 92, 102, 112, 122), der vom Arbeitsabschnitt aus verläuft, wobei der Schaft mit einem oder mehr Bereichen mit verringerter mechanischer Drehmomentstärke versehen ist, wobei der eine oder mehr Bereiche mit verringerter mechanischer Drehmomentstärke eine oder mehr Kerben (14, 24, 34, 44, 63, 65), Schlitze, Aussparungen, Kanäle und/oder zumindest zwei Bohrungen (94) umfasst, **dadurch gekennzeichnet, dass** die eine oder mehr Kerben, Schlitze, Aussparungen, Kanäle und/oder zumindest zwei Bohrungen mit einem Material (75) gefüllt sind, um den einen oder mehr Bereiche mit verringerter mechanischer Drehmomentstärke mit zusätzlicher Querstabilität zu versehen.

2. Werkzeugmaschineneinsatz nach Anspruch 1, wobei der Schaft einen Antriebsschaft (13, 23, 33, 43, 73, 83, 93, 103, 113, 123) umfasst.

3. Werkzeugmaschineneinsatz nach einem der Ansprüche 1 oder 2, wobei der Schaft zur Verbindung mit einer maschinenbetriebenen Vorrichtung, einer handbetriebenen Vorrichtung oder einem handgehaltenen Elektrowerkzeug geeignet ist.

4. Werkzeugmaschineneinsatz nach einem der vorhergehenden Ansprüche, wobei die eine oder mehr Kerben, Schlitze, Aussparungen, Kanäle und/oder zumindest zwei Bohrungen längs zur Achse des Schafts vorgesehen sind.

5. Werkzeugmaschineneinsatz nach Anspruch 1, wobei der eine oder mehr Bereiche mit verringerter mechanischer Drehmomentstärke eine einzelne ringförmige Kerbe umfassen, die um den Umfang des Schafts herum verläuft.

6. Werkzeugmaschineneinsatz nach einem der vorhergehenden Ansprüche, wobei der Werkzeugmaschineneinsatz ein oder mehr Verbindungsmittel (25, 35, 45, 62, 64, 76, 86, 96) umfasst, die zum Verbinden des Werkzeugmaschineneinsatzes mit einer Werkzeugmaschine geeignet sind.

7. Werkzeugmaschineneinsatz nach Anspruch 6, wobei sich ein erstes Verbindungsmittel (62) an oder benachbart zu einem Ende des Werkzeugmaschineneinsatzes befindet, das am weitesten vom Arbeitsabschnitt (66) entfernt ist, und wobei sich ein erster Bereich mit verringerter mechanischer Drehmomentstärke zwischenliegend zwischen dem ersten Verbindungsmittel und dem Arbeitsabschnitt befindet.

8. Werkzeugmaschineneinsatz nach Anspruch 7, wobei sich ein zweites Verbindungsmittel (64) zwischenliegend zwischen dem ersten Bereich mit verringerter mechanischer Drehmomentstärke und dem Arbeitsabschnitt befindet.

9. Werkzeugmaschineneinsatz nach einem der vorhergehenden Ansprüche, wobei der Arbeitsabschnitt dazu geeignet ist, mit einer Komponente, die bearbeitet werden soll, in Kontakt gebracht zu werden.

10. Werkzeugmaschineneinsatz nach einem der vorhergehenden Ansprüche, wobei der Werkzeugmaschineneinsatz zum Bohren, Fräsen, Aufweiten oder Gewindeschneiden einer Komponente, die bearbeitet werden soll, geeignet ist.

11. Werkzeugmaschineneinsatz nach einem der Ansprüche 9 oder 10, wobei die Komponente, die bearbeitet werden soll, Metall, Kunststoff, Holz, Stein- oder Keramikkomponenten, Fels, Erdreich, den Meeresboden und/oder dergleichen beinhaltet.

12. Werkzeugmaschineneinsatz nach einem der vorhergehenden Ansprüche, wobei der Werkzeugmaschineneinsatz auf die Anhäufung von genügenden mechanischen Drehmomentbelastungen hin zum Versagen an zumindest einem des einen oder mehr Bereichen mit verringerter mechanischer Drehmomentstärke geeignet ist.

13. Werkzeugmaschineneinsatz nach einem der vorhergehenden Ansprüche, wobei der Schaft derart gebaut ist, dass die Querstabilität des Werkzeugmaschineneinsatzes größer als bei einem Werkzeugmaschineneinsatz ist, bei dem eine äquivalente Verringerung der mechanischen Drehmomentstärke durch eine Verringerung des Durchmessers des Schafts erzielt ist.

14. Werkzeugmaschineneinsatz nach Anspruch 13, wobei der eine oder mehr Bereiche mit verringerter mechanischer Drehmomentstärke eine einzelne ringförmige Kerbe umfasst, die um den Umfang des Schafts herum verläuft.

## Revendications

1. Outil de machine-outil (10, 20, 30, 40, 50, 60, 70, 80, 90, 100, 110, 120) comprenant une partie de travail (11, 21, 31, 41, 52, 66, 71, 81, 91, 101, 111, 121) et une tige (12, 22, 32, 42, 51, 61, 72, 82, 92, 102, 112, 122) s'étendant depuis la partie de travail, la tige étant dotée d'une ou de plusieurs région (s) de résistance de couple mécanique réduite, dans lequel la ou les région(s) de résistance de couple mécanique réduite comprend/comprennent un(e) ou plusieurs encoche(s) (14, 24, 34, 44, 63, 65), fente(s), évidement(s), canal/canaux, et/ou au moins deux trous (94), **caractérisé en ce que** la/le ou les encoche(s), fente(s), évidement(s), canal/canaux et/ou au moins deux trous est/sont rempli (e) (s) d'un matériau (75) pour conférer une stabilité transversale supplémentaire à la/aux région(s) de résistance de couple mécanique réduite.

2. Outil de machine-outil selon la revendication 1 dans lequel la tige comprend un arbre d'entraînement (13, 23, 33, 43, 73, 83, 93, 103, 113, 123) .

3. Outil de machine-outil selon la revendication 1 ou 2 dans lequel la tige est adaptée à être raccordée à un dispositif actionné par machine, à un dispositif actionné à la main ou à un outil motorisé portatif.

4. Outil de machine-outil selon l'une quelconque des revendications précédentes dans lequel la/le ou les encoche(s), fente(s), évidement(s), canal/canaux, et/ou au moins deux trous est/sont disposé(e)(s) longitudinalement à l'axe de la tige.

5. Outil de machine-outil selon la revendication 1, dans lequel la ou les région(s) de résistance de couple mécanique réduite comprend/comprennent une encoche annulaire unique s'étendant autour de la circonférence de la tige.

6. Outil de machine-outil selon l'une quelconque des revendications précédentes, dans lequel l'outil de machine-outil comprend un ou plusieurs moyen(s) de raccordement (25, 35, 45, 62, 64, 76, 86, 96) adapté (s) à raccorder l'outil de machine-outil à une machine-outil.

7. Outil de machine-outil selon la revendication 6 dans lequel un premier moyen de raccordement (62) est situé au niveau de ou adjacent à l'extrémité de l'outil de machine-outil la plus éloignée de la partie de travail (66), et une première région de résistance de couple mécanique réduite est située de façon intermédiaire entre le premier moyen de raccordement et la partie de travail.

8. Outil de machine-outil selon la revendication 7 dans lequel un second moyen de raccordement (64) est situé de façon intermédiaire entre la première région de résistance de couple mécanique réduite et la partie de travail.

9. Outil de machine-outil selon l'une quelconque des revendications précédentes dans lequel la partie de travail est adaptée à être amenée en contact avec une pièce devant être usinée.

10. Outil de machine-outil selon l'une quelconque des revendications précédentes dans lequel l'outil de machine-outil est adapté au forage, au fraisage, à l'alésage ou au taraudage d'une pièce devant être usinée.

11. Outil de machine-outil selon la revendication 9 ou la revendication 10 dans lequel la pièce devant être usinée comprend des éléments composés de métal, plastique, bois, pierre ou céramique, de la roche, de la terre, du fond marin et/ou similaire(s).

12. Outil de machine-outil selon l'une quelconque des revendications précédentes, dans lequel, lors de l'accumulation de contraintes de couple mécanique suffisantes, l'outil de machine-outil est adapté à présenter une défaillance au niveau d'au moins une région parmi la ou les région(s) de résistance de couple mécanique réduite.

13. Outil de machine-outil selon l'une quelconque des revendications précédentes, dans lequel la tige est construite de sorte que la stabilité transversale de l'outil de machine-outil soit supérieure à celle d'un outil de machine-outil dans lequel une réduction équivalente de la résistance de couple mécanique est obtenue par une réduction du diamètre de la tige.

14. Outil de machine-outil selon la revendication 13 dans lequel la ou les région(s) de résistance de couple mécanique réduite comprend/comprennent une encoche annulaire unique s'étendant autour de la circonférence de la tige.
